# EUROPÄISCHE PATENTSCHRIFT

(11) **EP 1 039 087 B1**
(45) Veröffentlichungstag und Bekanntmachung des Hinweises auf die Patenterteilung: **10.05.2006**
(21) Anmeldenummer: 99122285.2
(22) Anmeldetag: 09.11.1999
(51) Int. Cl.: E06B 3/26, B29C 47/06, B29C 47/00, C08L 97/00

(54) **Verbundprofil, insbesondere für Fensterrahmen**
Composite profile for window frames
Profilé composite pour cadres de fenêtres

(30) Priorität: 11.11.1998 DE 19852082
(43) Veröffentlichungstag der Anmeldung: 27.09.2000
(73) Patentinhaber: Fraunhofer-Gesellschaft zur Förderung der angewandten Forschung e.V., 80686 München (DE)
(72) Erfinder: Nägele, Helmut, 76327 Pfinztal (DE); Pfitzer, Jürgen, 76327 Pfinztal (DE); Knoblauch, Marc, 70839 Gerlingen (DE); Diemert, Jan, 76229 Karlsruhe (DE); Geissler, Egon, Dr., 76689 Karlsdorf (DE); Geissler, Adam, Dr., 76689 Karlsdorf-Neuthard (DE); Inone, Emilia, 76327 Pfinztal (DE); Eyerer, Peter, Prof., Dr., 76228 Karlsruhe (DE); Eisenreich, Norbert, Dr., 76327 Pfinztal (DE); Elsner, Peter, Dr., 76327 Pfinztal (DE)

(56) Entgegenhaltungen:
- EP-A- 0 899 078
- WO-A-97/30838
- WO-A-98/06785
- DE-A- 3 234 842
- DE-A- 3 616 444
- DE-A- 3 920 854
- DE-A- 4 331 747
- US-A- 5 733 491

## Beschreibung

Die Erfindung betrifft ein Verbundprofil, insbesondere für Fensterrahmen, bestehend aus einem extrudierten Hohlprofil aus wenigstens einem synthetischen Polymer und einem dieses versteifenden Innenprofil.

Neben Vollholz- und Vollaluminiumprofilen haben sich für Fensterrahmen zunehmend Verbundprofile aus in der aus innenseitig mit Aluminiumprofilen versteiften Hohlprofilen aus Polyvinylchlorid (PVC), insbesondere aus Hart-PVC (PVC-U) durchgesetzt. Die Fertigung solcher Fensterrahmenprofile ist jedoch aufwendig und teuer, da zunächst Hohlprofile aus PVC extrudiert und diese anschließend durch Einziehen von Aluminiumprofilen versteift werden müssen. Da Aluminium eine hohe Wärmeleitfähigkeit besitzt, müssen besondere Maßnahmen zur Vermeidung von Kälte- bzw. Wärmebrücken getroffen werden, um nicht nur einwandfrei thermische Isolation im Bereich der Fenster zu gewährleisten, sondern insbesondere auch Kondenswasserbildung an der Innenseite zu vermeiden. Auch muß den unterschiedlichen Wärmeausdehnungskoeffizienten von Aluminium und PVC durch entsprechende konstruktive Maßnahmen Rechnung getragen werden.

Problematisch ist die Entsorgung solcher Fensterrahmen, da das Recycling des Metall-Kunststoff-Verbundes mit erheblichen Kosten verbunden ist. Zudem entstehen bei der Verbrennung von PVC toxische Verbindungen, wie polychlorierte Dioxine und Furane. In der chemischen Industrie sind daher Bestrebungen im Gange, Polymere auf der Basis von halogenierten Kohlenwasserstoffen durch halogenfreie Kohlenwasserstoffe zu ersetzen. Aufgrund der bei der Verbrennung synthetischer Kunststoffe grundsätzlich entstehenden CO₂-Emissionen und der Notwendigkeit der Schonung der Mineralölressourcen, aus denen die Grundstoffe für die Kunststoffsynthese gewonnen werden, ergibt sich der Wunsch, einen möglichst großen Teil der synthetischen Polymere generell durch umweltfreundlichere Stoffe zu substituieren.

Die US 5 833 491 A beschreibt eine Extrudiervorrichtung zum Koextrudieren von Verbundprofilen, wie Fensterrahmen, welche aus zwei verschiedenen Kunststoffen gefertigt sind. Ferner wird ein Koextrusionsverfahren zur Herstellung solcher Verbundprofile mittels einer solchen Vorrichtung beschrieben. Während über die konkrete Auswahl der für das Verbundprofil eingesetzten Polymere in dieser Druckschrift keine Aussagen getroffen sind, soll das Innenprofil - da es von dem Außenprofil bedeckt und folglich nicht sichtbar ist - kostengünstig sein, während das Außen- bzw. Hohlprofil aus hochwertigen Materialien mit guten Werkstoffeigenschaften gebildet sein soll.

Ferner ist es bekannt, Naturholzfurniere auf Fensterrahmenprofilen aus Kunststoff aufzubringen, was gemäß der DE 32 24 842 A1 dadurch geschieht, indem Profilleisten aus Massivholz an einer Klemmleiste des Kunststoffrahmens festgelegt werden.

Der Erfindung liegt die Aufgabe zugrunde, ein Verbundprofil mit verbesserten Werkstoffeigenschaften vorzuschlagen, das umweltfreundlicher ist und darüber hinaus einfach und somit preiswert herstellbar ist. Sie ist ferner auf ein Verfahren zur Herstellung eines derartigen Verbundprofils gerichtet.

Erfindungsgemäß wird diese Aufgabe bei einem Verbundprofil der eingangs genannten Art dadurch gelöst, daß das Innenprofil im wesentlichen aus extrudierbarem Lignin besteht.

Dem Innenprofil des erfindungsgemäßen Verbundkörpers können hierbei gegebenenfalls weitere natürliche Polymere, wie z.B. Proteine oder Proteinderivate, zugesetzt sein. Insbesondere ist vorgesehen, daß zur Herstellung des Innenprofils aufgrund seiner hohen Verfügbarkeit Alkali-Lignin als Pulver oder z.B. in Alkoholen, wie Glykol, gelöster Form eingesetzt wird.

Das metallfreie Verbundprofil zeichnet sich durch eine hohe Umweltfreundlichkeit aus, da zumindest das Innenprofil aus Lignin vollständig biologisch abbaubar ist und selbst bei Verbrennung eine ökologisch neutrale CO₂₋Bilanz besitzt. Die gegenüber Aluminium um Größenordnungen bessere Energiebilanz liegt auf der Hand. Aufgrund der guten schall- und wärmeisolierenden Eigenschaften des Lignins tragen aus dem erfindungsgemäßen Verbundprofil bestehende Fensterrahmen weiterhin entscheidend zu einer Heizkostenreduzierung bei und können im gesamten Baubereich eingesetzt werden. Da der Wärmeausdehnungskoeffizient von Lignin und den meisten synthetischen Polymeren sehr ähnlich sind, ist der Verbundkörper unempfindlich gegen hohe Temperaturschwankungen und folglich von langer Haltbarkeit. Eine lange Haltbarkeit wird insbesondere auch durch die hohe UV-Beständigkeit des Lignins erreicht. Die Substitution des Aluminiumprofils durch ein wärmedämmendes Ligninprofil ermöglicht zudem eine platzsparende Konstruktion der Rahmenprofile, da das Innenprofil selbst eine hohe Wärmedämmung hat, und ermöglicht somit eine Ausführung von Fensterrahmenprofilen in Leichtbauweise.

Aus nachwachsenden Rohstoffen gewonnene natürliche Polymere sind ansich bekannt. Sie zeichnen sich durch eine ökologisch neutrale CO₂-Bilanz aus, da bei Verbrennung von natürlichen Polymeren der Atmosphäre nicht mehr CO₂ zugeführt wird, als ihr beim Wachstum der Rohstoffe entzogen wurde. Desweiteren sind insbesondere biologisch abbaubare bzw. kompostierbare natürliche Polymere von vorrangigem Interesse, da diese im Vergleich mit den meisten synthetischen Polymeren in einem wesentlich kürzeren Zeitraum und in der Regel rückstandslos abgebaut werden.

Werkstoffe auf der Grundlage natürlicher Polymere bzw. durch Oxidation, Enzymbehandlung od. dgl. modifizierter natürlicher Polymere, wie Duroplaste aus Casein oder Thermoplaste aus Cellulosenitraten, - acetaten, -estern und -ethern sind ebenfalls bereits bekannt. Nachteilig bei vielen bekannten natürlichen Polymeren ist einerseits deren Hygroskopizität, die durch den Zusatz von Weichmachern noch verstärkt wird. Andererseits werden zu ihrer Herstellung hohe Temperaturen von etwa 200°C benötigt, so daß ein vergleichsweise hoher Energiebedarf erforderlich ist. Darüber hinaus sind diese Polymere häufig nicht geruchsneutral und weisen schlechtere, physikalische bzw. mechanische Eigenschaften als synthetische Kunststoffe auf.

Ein natürliches Polymer mit im Vergleich mit anderen Naturpolymeren merklich besseren Werkstoffeigenschaften ist das Lignin, welches sich durch eine vergleichsweise hohe Festigkeit, Steifigkeit, Schlagzähigkeit sowie durch eine hohe Beständigkeit gegenüber UV-Strahlung ausgezeichnet. Weiterhin ist Lignin ein geeignetes Dämmittel zur Wärme- und Schallisolierung. Lignin ist ein hochmolekulares polyphenolisches Makromolekül, das in verholzenden Pflanzen die Räume zwischen den Zellmembranen ausfüllt und zu Holz werden läßt, wobei ein Mischkörper aus druckfestem Lignin und zugfester Cellulose entsteht. Je nach Holzart können die Phenylgruppen des Lignins mit bis zu zwei Methoxygruppen und die Propylgruppen mit bis zu zwei Hydroxygruppen substituiert sein.

Lignin fällt in großen Mengen als Nebenprodukt bei der Zellstoffgewinnung an und ist somit in großen Mengen verfügbar. Hierbei entstehen beim Aufschluß von Holz Ligninsulfonsäuren als Bestandteil der Sulfitablaugen, in denen die Ligninsulfonsäuren als Phenolate ("Alkali-Lignin") gelöst sind. Durch Behandlung mit Schwefelsäure und Kohlendioxid kann die Ligninsäure ausgefällt werden.

Insbesondere Alkali-Lignin aus der Zellstoffindustrie wird bereits als Bindemittel für Preßplatten auf Holz- und Cellulosebasis, als Dispergiermittel oder als Stabilisator von Asphaltemulsionen verwendet.

Aus DE 197 00 902 A1, DE 197 00 903 A1, DE 197 00 905 A1, DE 197 00 907 A1 und DE 197 01 015 A1 ist ein Zwischenprodukt für die Herstellung von Polymerisaten aus Ligninderivaten, wie sie in der Zellstoffindustrie anfallen, bekannt, wobei die Ligninderivate mit phenoloxidierenden Enzymen in Gegenwart von Oxidationsmitteln, wie Sauerstoff, umgesetzt werden. Das Zwischenprodukt wird als Beschichtungsmittel für die Herstellung wasserfester Papiere und Pappen, als Bindemittel zur Herstellung von Holzspanplatten, als Bindemittel für Stärke zur Herstellung wasserfester Stärkederivate, als Dämmaterial oder als eine Komponente eines mit pflanzlichen Fasern angereicherten Verbundwerkstoffes eingesetzt. Eine Fertigung von Verbundprofilen, insbesondere Fensterrahmenprofilen, in Verbindung mit synthetischen Polymeren ist nicht vorgesehen.

Der EP 0 720 634 B1 ist ein aus Alkali-Lignin und Proteinen bzw. Proteinderivaten hergestelltes verrott- und kompostierbares Naturstoffgranulat entnehmbar, welches aus einer stereochemischen Modifikation durch Behandlung mit organischen Säuren, insbesondere Essigsäure, hervorgeht und thermoplastisch verarbeitbar ist. Ein Einsatz des Granulates, insbesondere zusammen mit synthetischen Kunststoffkomponenten zur Herstellung von Verbunden ist auch hier nicht vorgesehen.

Entsprechendes gilt für die WO 98/06785 A1, die eine biologisch abbaubare Zusammensetzung betrifft, welche durch Erhitzen und Verschmelzen von wenigstens einem Lignin und/oder Lignin enthaltenden Material mit einem Protein erhalten wurde und gegebenenfalls einen oder mehrere Zusatzstoffe aus der Gruppe Modifizierungsmittel, Alkenolpolymere, Füllstoffe, Gleitmittel, Plastifizierungsmittel, thermoplastische Polymere, Stabilisatoren, Flammschutzmittel, Farbstoffe, Nukleierungsmittel, Veschäumungsmittel und Pigmente enthält. Ferner geht es um die Herstellung von Gebrauchsgegenständen und Rohmaterialen, wie Reklameartikel, Etiketten, Becher, Blumentöpfe, Fadenspulen, Kerzenbecher, Halterungen, Geschirr, Bestecke, Flaschen, Verpackungsmaterialien, Folien, Säcke, Beutel, Schäume, Rohre, Stäbe, Granulate oder Pulver durch bekannte thermoplastische Verarbeitungsverfahren, wie Preßformen, Spritzgießen, Blasformen, (Ko)extrudieren und Vakuumformen. Auch hier ist kein Einsatz der Zusammensetzung auf der Basis von Lignin und Proteinen in Verbindung mit synthetischen Kunststoffkomponenten, geschweige denn zur Herstellung von Verbunden vorgesehen.

Das aus Lignin bestehende Innenprofil, gegebenenfalls auch das dieses umgebende Polymer, kann weiterhin synthetische Verstärkungsfasern (z.B. Glas-, Polyamid-, Aramid- oder Kohlefasern) sowie natürliche Verstärkungsfasern (z.B. Flachs-, Sisal-, Cellulose-, Holz-, Miscanthus- oder Hanffasern) enthalten, welche dem Verbundprofil eine noch höhere Zugfestigkeit verleihen. Aufgrund der ökologisch neutralen CO₂-Bilanz ist die Verwendung natürlicher Verstärkungsfasern und aufgrund der hohen Zugfestigkeit insbesondere die Verwendung von Hanffasern bevorzugt.

Für das Hohlprofil kommen sämtliche bekannten synthetischen, thermoplastischen oder thermoelastischen Polymere in frage, wie z.B. Polyolefine, Polyamide, Polyester, Polyacetate, Polycarbonate, Polyurethane, Vinylpolymere oder Copolymere hiervon. Die synthetischen Polymere können auch Zusatzstoffe, wie Weichmacher (Phthalate, Adipate, Phosphate) od. dgl. enthalten, so daß selbst harte synthetische Polymere, wie z.B. PVC, eingesetzt werden können. Aus den eingangs genannten Gründen wird aber eine Substitution halogenierter Polymere durch halogenfreie Polymere bevorzugt. Diese synthetischen Polymere des Hohlprofils sind vornehmlich für die Witterungsbeständigkeit des Verbundprofils verantwortlich.

Das Hohlprofil des erfindungsgemäßen Verbundprofils kann an seiner Oberfläche eine die Sichtseite bildende Deckschicht, wie eine Dekorschicht, aufweisen, wobei die Deckschicht ein Furnier, insbesondere aus Holz, sein kann.

Das Hohlprofil aus einem synthetischen Polymer und das Innenprofil aus Lignin sind vorzugsweise koextrudiert.

Zur Herstellung eines erfindungsgemäßen Verbundprofils werden plastifiziertes Lignin und wenigstens ein plastifiziertes synthetisches Polymer koextrudiert, wobei das synthetische Polymer das als Innenprofil dienende Lignin umgibt. Auf diese Weise entfällt das separate Einpressen eines Versteifungsprofils in ein Hohlprofil, wie bei herkömmlichen Kunststoff-Fensterprofilen erforderlich, und kann das Verbundprofil in einem Arbeitsgang gefertigt werden.

Um die Zugfestigkeit insbesondere des Ligninprofils noch zu erhöhen, können dem Lignin oder auch zusätzlich dem synthetischen Polymer vor oder während der Koextrusion synthetische und/oder natürliche Verstärkungsfasern, wie z.B. Hanffasern, zugesetzt werden.

Falls gewünscht, kann auf das erfindungsgemäße Verbundprofil noch ein Deck- bzw. eine Dekorschicht, wie ein Furnier, aufgebracht werden, wobei das Furnier vorzugsweise aus Holz besteht. Das Verbundprofil kann auch nach der Extrusion beschichtet, insbesondere holzfurniert, werden, oder es wird auf das Verbundprofil nach der Extrusion eine Oberflächenstruktur aufgebracht.

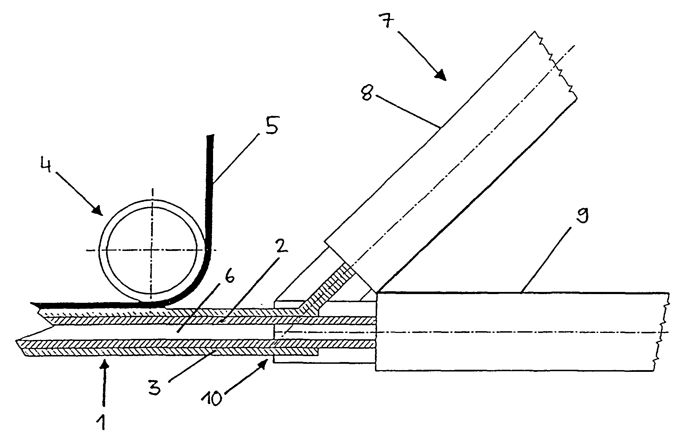

Nachstehend ist die Erfindung anhand einer bevorzugten Ausführungsform unter Bezugnahme auf die Zeichnung, die eine schematische Darstellung der Herstellung des Verbundprofils zeigt, im einzelnen erläutert.

Die Zeichnung zeigt die Herstellung eines erfindungsgemäßen Verbundprofils 1 für Fensterrahmen. Hierbei wird ein aus Lignin bestehende Innenprofil 2 mit einem dieses umgebenden Hohlprofil 3 aus einem synthetischen thermoplastischen oder thermoelastischen Polymer mittels eines Extruders 7 koextrudiert. Der Extruder 7 weist zwei separate Schneckengehäuse 8, 9 für das Lignin bzw. für das jeweilige synthetische Polymer auf, wobei das Schneckengehäuse 9 zur Plastifizierung und Extrusion des Lignins zusätzlich Einrichtungen zur Aufgabe von Verstärkungsfasern aufweisen kann, um die Zugfestigkeit des Lignin-Innenprofils 2 zu erhöhen. Der Spritzkopf 10 des Extruders 7 ist derart augebildet, daß das Lignin-Innenprofil 2 als Hohlprofil extrudiert wird. Der Innenraum 6 dieses Hohlprofils trägt zu einer Materialersparnis bei und kann beispielsweise evakuiert werden, um eine höhere Schall- und Wärmedämmung zu erreichen. Alternativ kann das Lignin-Innenprofil 2 auch massiv ausgeführt sein. Auf das Innenprofil 2 wird das Hohlprofil 3 aus dem synthetischen Polymer aufextrudiert, so daß ein inniger Verbund aus beiden Profilen 2, 3 entsteht. Auf die Außenseite des Hohlprofils 3 aus dem synthetischen Polymer kann bei Bedarf noch eine Deckschicht 5, beispielsweise in Form einer Folie, eines Furniers oder dergleichen aufgebracht, beispielsweise mittels einer Walze 4 auflaminiert werden.

## Patentansprüche

1. Verbundprofil (1), insbesondere für Fensterrahmen, bestehend aus einem extrudierten Hohlprofil (3) aus wenigstens einem synthetischen Polymer und einem dieses versteifenden Innenprofil, **dadurch gekennzeichnet, daß** das Innenprofil (2) im wesentlichen aus extrudierbarem Lignin besteht.

2. Verbundprofil nach Anspruch 1, **dadurch gekennzeichnet, daß** das Lignin Alkali-Lignin ist.

3. Verbundprofil nach Anspruch 1 oder 2, **dadurch gekennzeichnet, daß** zumindest das Lignin synthetische Verstärkungsfasern enthält.

4. Verbundprofil nach einem der Ansprüche 1 bis 3, **dadurch gekennzeichnet, daß** zumindest das Lignin natürliche Verstärkungsfasern enthält.

5. Verbundprofil nach einem der Ansprüche 1 bis 4, **dadurch gekennzeichnet, daß** das Hohlprofil (3) aus einem thermoplastischen oder thermoelastischen Polymer besteht.

6. Verbundprofil nach Anspruch 5, **dadurch gekennzeichnet, daß** das Hohlprofil (3) aus Polyolefin, Polyamid, Polyester, Polyacetat, Polycarbonat, Polyurethan, Vinylpolymer oder Copolymeren hiervon besteht.

7. Verbundprofil nach einem der Ansprüche 1 bis 6, **dadurch gekennzeichnet, daß** das Hohlprofil (2) eine die Sichtseite bildende Deckschicht, wie eine Dekorschicht (5), aufweist.

8. Verbundprofil nach Anspruch 7, **dadurch gekennzeichnet, daß** die Deckschicht (5) ein Holzfurnier ist.

9. Verbundprofil nach einem der Ansprüche 1 bis 8, **dadurch gekennzeichnet, daß** das Hohlprofil (3) und das Innenprofil (2) koextrudiert sind.

10. Verfahren zur Herstellung eines Verbundprofils (1) gemäß einem der Ansprüche 1 bis 9, **dadurch gekennzeichnet, daß** plastifiziertes Lignin (2) und wenigstens ein plastifiziertes synthetisches Polymer (3) koextrudiert werden.

11. Verfahren nach Anspruch 10, **dadurch gekennzeichnet, daß** zumindest dem Lignin vor oder während der Koextrusion synthetische und/oder natürliche Verstärkungsfasern zugesetzt werden.

12. Verfahren nach Anspruch 10 oder 11, **dadurch gekennzeichnet, daß** auf das Verbundprofil (1) eine Deckschicht (5), wie ein Furnier aufgebracht wird.

13. Verfahren nach Anspruch 10 oder 11, **dadurch gekennzeichnet, daß** das Verbundprofil (1) nach der Extrusion beschichtet, insbesondere holzfurniert, wird.

14. Verfahren nach Anspruch 10 oder 11, **dadurch gekennzeichnet, daß** auf das Verbundprofil (1) nach der Extrusion eine Oberflächenstruktur aufgebracht wird.

## Claims

1. Composite profile (1), in particular for window frames, comprising an extruded hollow profile (3) made of at least one synthetic polymer and an inner profile which stiffens the latter, **characterised in that** the inner profile (2) essentially comprises extrudable lignin.

2. Composite profile according to claim 1, **characterised in that** the lignin is alkali lignin.

3. Composite profile according to claim 1 or 2, **characterised in that** at least the lignin contains synthetic reinforcing fibres.

4. Composite profile according to one of the claims 1 to 3, **characterised in that** at least the lignin contains natural reinforcing fibres.

5. Composite profile according to one of the claims 1 to 4, **characterised in that** the hollow profile (3) comprises a thermoplastic or thermoelastic polymer.

6. Composite profile according to claim 5, **characterised in that** the hollow profile (3) comprises a polyolefin, polyamide, polyester, polyacetate, polycarbonate, polyurethane, vinyl polymer or copolymers thereof.

7. Composite profile according to one of the claims 1 to 6, **characterised in that** the hollow profile (2) has a cover layer, such as a decorative layer (5), which forms the visible side.

8. Composite profile according to claim 7, **characterised in that** the cover layer (5) is a wood veneer.

9. Composite profile according to one of the claims 1 to 8, **characterised in that** the hollow profile (3) and the inner profile (2) are coextruded.

10. Method for producing a composite profile (1) according to one of the claims 1 to 9, **characterised in that** plasticised lignin (2) and at least one plasticised synthetic polymer (3) are coextruded.

11. Method according to claim 10, **characterised in that** at least synthetic and/or natural reinforcing fibres are added to the lignin before or during the coextrusion.

12. Method according to claim 10 or 11, **characterised in that** a cover layer (5), such as a veneer, is applied on the composite profile (1).

13. Method according to claim 10 or 11, **characterised in that** the composite profile (1) is coated, in particular wood-veneered, after the extrusion.

14. Method according to claim 10 or 11, **characterised in that** a surface structure is applied on the composite profile (1) after the extrusion.

## Revendications

1. Profilé composite (1), en particulier pour des châssis de fenêtre, se composant d'un profilé creux (3) extrudé obtenu à partir d'au moins un polymère synthétique et d'un profilé intérieur renforçant celui-ci,
**caractérisé en ce que**
le profilé intérieur (2) est essentiellement en lignine extrudable.

2. Profilé composite selon la revendication 1,
**caractérisé en ce que**
la lignine est une lignine d'alcali.

3. Profilé composite selon la revendication 1 ou 2,
**caractérisé en ce qu'**
au moins la lignine contient des fibres de renforcement synthétiques.

4. Profilé composite selon l'une quelconque des revendications 1 à 3,
**caractérisé en ce qu'**
au moins la lignine contient des fibres de renforcement naturelles.

5. Profilé composite selon l'une quelconque des revendications 1 à 4,
**caractérisé en ce que**
le profilé creux (3) se compose d'un polymère thermoplastique ou thermoélastique.

6. Profilé composite selon la revendication 5,
**caractérisé en ce que**
le profilé creux (3) se compose de polyoléfine, polyamide, polyester, polyacétate, polycarbonate, polyuréthane, polymère vinylique ou de copolymères de ceux-ci.

7. Profilé composite selon l'une quelconque des revendications 1 à 6,
**caractérisé en ce que**
le profilé creux (2) présente une couche de couverture formant la face visible, telle qu'une couche décorative (5).

8. Profilé composite selon la revendication 7,
**caractérisé en ce que**
la couche de couverture (5) est un contre-plaqué en bois.

9. Profilé composite selon l'une quelconque des revendications 1 à 8,
**caractérisé en ce que**
le profilé creux (3) et le profilé intérieur (2) sont co-extrudés.

10. Procédé de fabrication d'un profilé composite (1) selon l'une quelconque des revendications 1 à 9,
**caractérisé en ce qu'**
on co-extrude une lignine plastifiée (2) et au moins un polymère synthétique plastifié (3).

11. Procédé selon la revendication 10,
**caractérisé en ce qu'**
on ajoute à la lignine au moins des fibres de renforcement synthétiques et/ ou naturelles, avant ou pendant la co-extrusion.

12. Procédé selon la revendication 10 ou 11,
**caractérisé en ce qu'**
on applique sur le profilé composite (1) une couche de couverture (5), telle qu'un contre-plaqué.

13. Procédé selon la revendication 10 ou 11,
**caractérisé en ce qu'**
après l'extrusion, le profilé composite (1) reçoit un revêtement, en particulier un contre-plaqué en bois.

14. Procédé selon la revendication 10 ou 11,
**caractérisé qu'**
après l'extrusion, on applique une structure de surface sur le profilé composite (1).
